# FASCICULE DE BREVET EUROPEEN

(11) **EP 2 296 970 B1**
(45) Date de publication et mention de la délivrance du brevet: **01.02.2012**
(21) Numéro de dépôt: 09766033.6
(22) Date de dépôt: 14.05.2009
(51) Int. Cl.: B64D 27/24

(54) **AERONEF A ALIMENTATION EN ENERGIE HYBRIDE**
MIT HYBRIDENERGIE ANGETRIEBENES FLUGZEUG
AIRCRAFT POWERED BY HYBRID POWER

(30) Priorité: 26.05.2008 FR 0853393
(43) Date de publication de la demande: 23.03.2011
(73) Titulaire: Snecma, 75015 Paris (FR)
(72) Inventeur: FOUCAULT, Alain, F-77820 Le Chatelet En Brie (FR); JUCHAULD, Etienne, F-77920 Samois Sur Seine (FR); PIERROT, Arnaud, F-77350 Le Mee Sur Seine (FR); ROUSSELIN, Stéphane, F-77850 Hericy (FR)
(74) Mandataire: Barbin le Bourhis, Joël
(86) Numéro de dépôt international: PCT/FR2009/050898
(87) Numéro de publication internationale: WO 2009/153471

(56) Documents cités:
- WO-A-96/28343
- WO-A-2004/015796
- DE-C1- 10 055 401
- US-A1- 2007 034 741

## Description

La présente invention a pour objet un aéronef à alimentation en énergie mixte.

La quasi totalité des aéronefs sont propulsés par l'intermédiaire de moteurs thermiques à combustion interne. Il peut s'agir de moteurs à pistons à deux ou quatre temps pour les aéronefs de petite puissance ou le plus souvent des turbomachines pour les aéronefs de puissance plus élevée.

Ce genre de machines de propulsion utilise des hydrocarbures principalement de l'essence ou du kérosène. Vu le coût des hydrocarbures et l'attention beaucoup plus grande portée au problème de pollution, il serait intéressant de pouvoir diminuer la consommation d'hydrocarbure et notamment de kérosène.

Dans ce but, on a proposé à titre expérimental une propulsion électrique d'aéronefs. Dans ce cas, la source d'énergie est tirée soit d'accumulateurs ou éventuellement d'une pile à combustible, soit de panneaux solaires disposés sur les structures externes de l'aéronef, et le moteur est électrique.

Le document WO 96/28343 A (AEROVIRONMENT INC [US]) est considéré comme l'état de la technique le plus proche, décrit un aéronef à alimentation en énergie hybride comprenant:
- une structure externe,
- des équipements électriques,
- des moyens de propulsion électrique; et
- des moyens d'alimentation en énergie des moyens de propulsion,
- une pluralité de convertisseurs directs d'énergie lumineuse en énergie électrique, disposés sur au moins une partie de la surface externe de la structure externe
- des moyens pour récupérer l'énergie électrique excédentaire s'il y en a.

Cependant, compte tenu du coût actuel des capteurs solaires et de leur rendement relativement faible, les applications sont très limitées, quant à la propulsion d'aéronefs par moteur électrique.

Cependant, des efforts importants sont réalisés actuellement pour améliorer le rendement de capteurs solaires et pour en diminuer le coût.

Un objet de la présente invention est de fournir un aéronef à alimentation en énergie mixte qui permette de réduire la consommation d'hydrocarbure par rapport aux solutions classiques dans le cas où la vitesse de cet aéronef n'est pas trop élevée, par exemple inférieure à 300 km/h.

Pour atteindre ce but, selon l'invention, l'aéronef à alimentation en énergie hybride comprend :
- une structure externe,
- des équipements électriques,
- des moyens de propulsion à combustion interne et
- des moyens d'alimentation en énergie des moyens de propulsion
- une pluralité de convertisseurs directs d'énergie lumineuse en énergie électrique, disposés sur au moins une partie de la surface externe de la structure externe ;
- des moyens pour comparer l'énergie électrique produite par lesdits convertisseurs à la consommation instantanée desdits équipements électriques ;
- des moyens pour récupérer l'énergie électrique excédentaire s'il y en a, et
- des moyens pour fournir auxdits moyens de propulsion un complément d'énergie à partir de ladite énergie électrique excédentaire si elle existe.

On comprend que grâce aux dispositions de l'invention, l'aéronef dispose comme source d'énergie complémentaire de l'énergie électrique produite par les convertisseurs directs d'énergie lumineuse en énergie électrique. Ces moyens d'alimentation en énergie complémentaire sont utilisés préférentiellement pour satisfaire à la consommation instantanée des équipements électriques de l'aéronef et l'éventuel surplus d'énergie électrique est fourni au moyen de propulsions du type à combustion interne.

On obtient ainsi une gestion optimale de l'ensemble de l'énergie disponible et en particulier de l'énergie électrique disponible.
Un autre avantage de cette invention est de fournir une source d'alimentation électrique de secours en cas de panne des autres moyens.

Selon un premier mode de mise en oeuvre, l'aéronef est caractérisé en ce que les moyens pour fournir le complément d'énergie comprennent au moins un moteur électrique alimenté par ledit excédent d'énergie électrique s'il existe, ledit moteur électrique coopérant avec lesdits moyens de propulsion.

On comprend que dans ce premier mode de mise en oeuvre, le complément d'énergie excédentaire produit par les convertisseurs énergie lumineuse en énergie électrique sert à alimenter un moteur électrique qui coopère avec les moyens de propulsion.

Selon un deuxième mode de mise en oeuvre, l'aéronef est caractérisé en ce que lesdits moyens pour fournir de l'énergie complémentaire comprennent
- un ensemble pour produire de l'hydrogène à partir de l'eau, ledit ensemble de production d'hydrogène étant alimenté par ladite énergie électrique excédentaire si elle existe, et
- des moyens pour fournir l'hydrogène aux moyens de production d'énergie thermique.

On comprend que dans ce deuxième mode de mise en oeuvre, l'énergie électrique sert à produire de l'hydrogène à partir de l'eau disponible et on prévoit également des moyens pour fournir l'hydrogène au moyen de production de propulsion à combustion interne.

Dans ce deuxième mode de mise en oeuvre, de préférence l'aéronef est caractérisé en ce qu'il comprend
- des moyens pour condenser au moins une partie des gaz d'échappement, des moyens de propulsion ;
- des moyens pour récupérer l'eau liquide dans les produits de condensat ; et
- des moyens pour alimenter l'ensemble de production d'hydrogène avec l'eau ainsi obtenue.

D'autres caractéristiques et avantages de l'invention apparaîtront mieux à la lecture de la description qui suit de plusieurs modes de réalisation de l'invention donnés à titre d'exemples non limitatifs. La description se réfère aux figures annexées, sur lesquelles :
- la figure 1 est une vue schématique d'un aéronef équipé de convertisseurs énergie lumineuse/énergie électrique ;
- la figure 2 est un schéma du dispositif de production d'énergie selon un premier mode de mise en oeuvre ; et
- la figure 3 est un schéma montrant le deuxième mode de réalisation de fourniture énergie électrique.

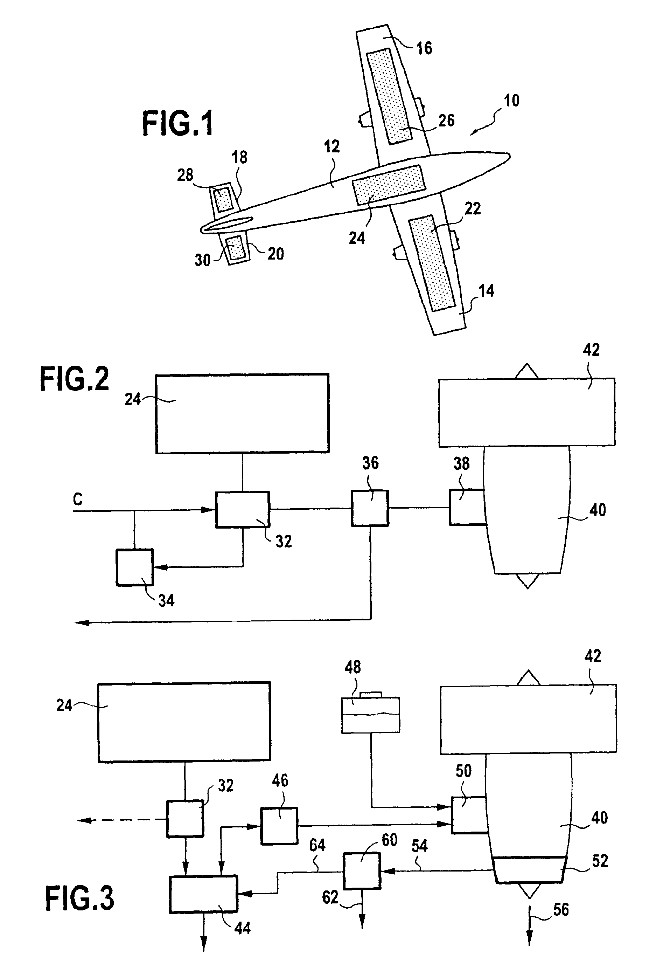

Sur la figure 1, on a représenté de façon très schématique la structure externe d'un aéronef 10 avec son fuselage 12 ses ailes 14 et 16 et ses plans stabilisateurs 18 et 20. Chacun de ces éléments constitutifs de la structure externe de l'aéronef 10 est équipé de convertisseurs d'énergie lumineuse en énergie électrique portant respectivement les références 22, 24, 26, 28 et 30. Il va de soi que la figure 1 est fournie uniquement à titre d'exemples et que les zones recouvertes de convertisseurs énergie lumineuse/énergie électrique seraient adaptées à la forme particulière de la structure externe de l'aéronef.

En se référant tout d'abord à la figure 2, on va décrire un premier mode de réalisation de l'invention pour fournir une énergie complémentaire électrique aux moyens de propulsion de l'aéronef.

Sur cette figure, on a représenté un panneau solaire, par exemple le panneau 24 de la figure 1 qui est relié à un dispositif de gestion électrique 32. Ce dispositif de gestion électrique reçoit un signal de commande C qui est représentatif des besoins en énergie électrique des équipements électriques 34 de l'aéronef à chaque instant. Les circuits du dispositif de gestion 32 comprennent des moyens de comparaison de l'énergie électrique fournie instantanément par l'ensemble des panneaux solaires avec le signal C représentatif des besoins des équipements électriques de l'aéronef. Si ces besoins existent au moins une partie de l'énergie électrique produite par les panneaux solaires 24 etc., sera transmise aux équipements électriques de l'aéronef. Le surplus d'énergie électrique est transmis à un boîtier électronique 36 de gestion de moyens moteurs électriques portant la référence générale 38 et qui sont accouplés soit à l'arbre basse pression, soit à l'arbre haute pression des moyens de propulsion de l'aéronef dans le cas où l'aéronef est propulsé par une turbomachine. Ce boîtier électronique 36 commande l'alimentation de la machine électrique 38 qui de préférence est constituée par le démarreur électrique ou par une génératrice apte à fonctionner en moteur qui est disponible sur tous les moyens de propulsion d'aéronef.

On comprend qu'ainsi grâce à l'invention, l'énergie électrique produite par les panneaux solaires tels que 24 est, grâce au dispositif de gestion 32, d'abord affectée aux équipements électriques 34 de l'aéronef. Cette énergie électrique peut en partie être transmise aux équipements électriques 34 et en partie au boîtier électronique 36 selon les besoins instantanés en énergie électrique des équipements électriques de l'aéronef. L'excédent d'énergie électrique, s'il est détecté par le dispositif 32 est utilisé pour alimenter le moteur électrique 38 par l'intermédiaire du boîtier électronique, ce qui permet soit un apport d'énergie aux moteurs thermiques à combustion interne 40 de l'aéronef soit une économie de puissance mécanique soutirée sur ces moteurs 40 pour être transformé en puissance électrique.

Il faut souligner que les moyens moteurs électriques existant déjà même si ils ne sont pas toujours réversibles, la mise en oeuvre de l'invention n'entraîne pas la mise en place d'équipements supplémentaires.

En se référant maintenant à la figure 3, on va décrire un deuxième mode de réalisation de l'invention. Selon ce deuxième mode de réalisation, le surplus éventuel d'énergie électrique produite par les capteurs solaires est utilisée pour hydrolyser de l'eau afin de produire de l'hydrogène qui sera mélangé au carburant. Sur cette figure 3, on a représenté un convertisseur énergie lumineuse/énergie électrique 24 qui est raccordée à un circuit 32 de gestion électrique ayant exactement la même fonction que celui qui a été décrit en liaison avec la figure 2.

L'énergie électrique en excédant par rapport aux besoins des équipements électriques de l'aéronef est utilisée dans un hydrolyseur 44 alimenté en eau. L'hydrogène produit par l'hydrolyseur 44 est stocké dans un réservoir 46. Par ailleurs, le carburant standard par exemple le kérosène est stocké dans le réservoir 48. L'hydrogène stocké dans le réservoir 46 et le carburant stocké dans le réservoir 48 alimentent un circuit de régulation des carburants 50 qui, en fonction des disponibilités en hydrogène, définit le mélange optimal hydrogène/carburant servant à alimenter le moteur thermique 40 de l'aéronef.

De préférence, l'eau servant à alimenter l'hydrolyseur 44 est récupérée dans les gaz d'échappement du moteur thermique 40. Pour cela, un circuit refroidisseur 52 refroidit les gaz d'échappement et distribue par la conduite 54 la fraction de gaz d'échappement refroidi tandis que la portion non recyclée est évacuée par la conduite 56. Les gaz d'échappement refroidis alimentant la conduite 54 sont acheminés vers un circuit 60 de séparation de l'eau et du gaz carbonique. Le mélange gaz carbonique/azote est évacué du séparateur 60 par la conduite 62, tandis que l'eau séparée du reste des gaz d'échappement est acheminée par la conduite 64 vers l'hydrolyseur 44.

On comprend que ce deuxième mode de réalisation de l'invention présente tous les avantages du premier puisque la production d'énergie électrique par les capteurs solaires est gérée par le circuit 32 pour alimenter en priorité les équipements électriques de l'aéronef et que ce n'est que la partie excédentaire si elle existe qui sert à alimenter l'hydrolyseur et donc à produire l'hydrogène qui viendra constituer une partie du carburant pour le moteur thermique 40. En outre, il faut ajouter que dans le mode préféré de réalisation de l'invention décrite en liaison avec la figure 3, l'eau utilisée dans l'hydrolyseur est récupérée dans les gaz d'échappement du moteur à combustion interne 40. Il va cependant de soi qu'on ne sortirait pas de l'invention si on utilisait une source d'eau autonome bien que cela ne constitue pas la solution optimale.

## Revendications

1. Aéronef à alimentation en énergie hybride comprenant :
- une structure externe (12 à 20),
- des équipements électriques (34),
- des moyens de propulsion (40) à combustion interne,
- des moyens d'alimentation en énergie des moyens de propulsion,
- une pluralité de convertisseurs directs d'énergie lumineuse en énergie électrique (22 à 30), disposés sur au moins une partie de la surface externe de la structure externe ;
- des moyens (32) pour comparer l'énergie électrique produite par lesdits convertisseurs à la consommation instantanée desdits équipements électriques (34) ;
- des moyens (36) pour récupérer l'énergie électrique excédentaire s'il y en a, et ;
- des moyens (38, 46, 50) pour fournir auxdits moyens de propulsion (40) un complément d'énergie à partir de ladite énergie électrique excédentaire si elle existe.

2. Aéronef selon la revendication 1, **caractérisé en ce que** les moyens pour fournir le complément d'énergie comprennent au moins un moteur électrique (38) alimenté par ledit excédent d'énergie électrique s'il existe, ledit moteur électrique coopérant avec lesdits moyens de propulsion (40).

3. Aéronef selon la revendication 2, **caractérisé en ce que** ledit moteur électrique (38) est le démarreur des moyens de propulsion.

4. Aéronef selon la revendication 1, **caractérisé en ce que** lesdits moyens pour fournir de l'énergie complémentaire comprennent
- un ensemble pour produire de l'hydrogène (44) à partir de l'eau, ledit ensemble de production d'hydrogène étant alimenté par ladite énergie électrique excédentaire si elle existe, et
- des moyens (46, 50) pour fournir l'hydrogène aux moyens de production d'énergie thermique.

5. Aéronef selon la revendication 4, **caractérisé en ce qu'**il comprend
- des moyens (52) pour condenser au moins une partie des gaz d'échappement, des moyens de propulsion (40);
- des moyens (60) pour récupérer l'eau liquide dans les produits de condensat ; et
- des moyens (64) pour alimenter l'ensemble de production d'hydrogène avec l'eau ainsi obtenue.

6. Aéronef selon la revendication 5, **caractérisé en ce que** lesdits moyens de production d'énergie thermique comprennent un circuit de régulation des carburants (50), l'hydrogène produit par les moyens de production d'hydrogène (44, 46) étant injecté dans ladite chambre de combustion.

## Claims

1. An aircraft with a hybrid power supply, the aircraft comprising:
an external structure (12 to 20);
electrical equipment (34);
internal combustion propulsion means (40);
means for feeding energy to the propulsion means;
a plurality of converters (22 to 30) for directly converting light energy into electrical energy, which converters are disposed on at least a fraction of the outside surface of the external structure;
means (32) for comparing the electrical energy produced by said converters with the instantaneous consumption of said electrical equipment (34);
means (36) for recovering the excess electrical energy, if any; and
means (38, 46, 50) for delivering to said propulsion means (40) additional energy taken from said excess electrical energy, if any.

2. An aircraft according to claim 1, **characterized in that** the means for delivering the additional energy comprise at least one electric motor (38) powered by said excess electrical energy if any, said electric motor cooperating with said propulsion means (40).

3. An aircraft according to claim 2, **characterized in that** said electric motor (38) is the starter of the propulsion means.

4. An aircraft according to claim 1, **characterized in that** said means for delivering additional energy comprise:
a hydrogen-production assembly (44) for producing hydrogen from water, said hydrogen-production assembly being fed with said excess electrical energy, if any; and
means (46, 50) for delivering the hydrogen to the heat energy production means.

5. An aircraft according to claim 4, **characterized in that** it comprises:
means (52) for condensing at least some of the exhaust gas from the propulsion means (40);
means (60) for recovering liquid water from the condensate produced; and
means (64) for feeding the hydrogen production assembly with the water obtained in this way.

6. An aircraft according to claim 5, **characterized in that** said heat energy production means include a few regulator circuits (50), the hydrogen produced by the hydrogen production means (44, 46) being injected into said combustion chamber.

## Patentansprüche

1. Flugzeug mit Hybridenergieversorgung, umfassend:
- eine Außenstruktur (12 bis 20),
- elektrische Einrichtungen (34),
- Antriebsmittel (40) mit innerer Verbrennung,
- Mittel zur Energieversorgung der Antriebsmittel,
- eine Vielzahl von Lichtenergie/elektrische Energie-Direktwandlern (22 bis 30), die an wenigstens einem Teil der Außenseite der Außenstruktur angeordnet sind,
- Mittel (32) zum Vergleichen der durch die Wandler erzeugten elektrischen Energie mit dem momentanen Verbrauch der elektrischen Einrichtungen (34),
- Mittel (36) zur Rückgewinnung der überschüssigen elektrischen Energie, falls hiervon vorhanden ist, sowie
- Mittel (38, 46, 50), um an die Antriebsmittel (40) eine ergänzende Energie aus der überschüssigen elektrischen Energie -falls vorhanden- zu liefern.

2. Flugzeug nach Anspruch 1, **dadurch gekennzeichnet, daß** die Mittel zum Liefern der ergänzenden Energie wenigstens einen Elektromotor (38) umfassen, der mit der überschüssigen elektrischen Energie -falls vorhanden- gespeist wird, wobei der Elektromotor mit den Antriebsmitteln (40) zusammenwirkt.

3. Flugzeug nach Anspruch 2, **dadurch gekennzeichnet, daß** der Elektromotor (38) der Starter der Antriebsmittel ist.

4. Flugzeug nach Anspruch 1, **dadurch gekennzeichnet, daß** die Mittel zum Liefern der ergänzenden Energie umfassen
- eine Anordnung zur Erzeugung von Wasserstoff (44) aus dem Wasser, wobei die Wasserstofferzeugungsanordnung mit der überschüssigen elektrischen Energie - falls vorhanden- gespeist wird, und
- Mittel (46, 50), um den Wasserstoff an die Wärmeenergieerzeugungsmittel zu liefern.

5. Flugzeug nach Anspruch 4, **dadurch gekennzeichnet, daß** es umfaßt
- Mittel (52) zum Kondensieren wenigstens eines Teils der Abgase der Antriebsmittel (40),
- Mittel (60) zur Rückgewinnung des flüssigen Wassers aus den Kondensatprodukten sowie
- Mittel (64) zur Versorgung der Wasserstofferzeugungsanordnung mit dem auf diese Weise gewonnenen Wasser.

6. Flugzeug nach Anspruch 5, **dadurch gekennzeichnet, daß** die Wärmeenergieerzeugungsmittel einen Treibstoffregelkreis (50) umfassen, wobei der durch die Wasserstofferzeugungsmittel (44, 46) erzeugte Wasserstoff in die Brennkammer eingeleitet wird.
